# EUROPEAN PATENT APPLICATION

(11) **EP 1 515 282 A2**
(43) Date of publication of application: **16.03.2005**
(21) Application number: 04005600.4
(22) Date of filing: 09.03.2004
(51) Int. Cl.: G07F 7/10

(54) **Storage apparatus and access system**

(30) Priority: 16.07.2003 US 621692
(71) Applicant: Hewlett Packard Company, a Delaware Corporation, Palo Alto, CA 94304 (US)
(72) Inventor: Delorme, Alexandre P.V., Boulder CO 80301 (US)
(74) Representative: Schoppe, Fritz, Dipl.-Ing.

(57) **Abstract**

Apparatus (10) according to one embodiment of the invention comprises a substrate (20), a processor (16) provided on the substrate (20), and a computer-readable medium (18) provided on the substrate (20). An access device (28) operatively associated with the substrate (20) interfaces with the processor (16) and the computer-readable medium (18) provided on the substrate (20).

## Description

### Background

A "smart card" comprises a credit card-sized substrate having a computer chip imbedded therein. Depending on its configuration, the computer chip in the smart card may be capable of storing information, and/or providing security features. These capabilities allow smart cards to be used in a wide variety of applications. For example, smart cards are commonly used as "pass-keys" to provide access to secure areas and structures. Smart cards are commonly used in areas such as telephony (e.g., in the form of a prepaid phone card), mass transportation (e.g., in the form of a ticket for electronic tollbooths), financial (e.g., in the form of credit, debit, or atm cards), retail (e.g., retailer loyalty reward programs or vending machines ), computer network user authentication and repudiation, and identification (e.g., driver's licenses, or passports).

Although smart cards are a technical achievement in their own right, their functionality is not carried out until they are connected to or interfaced with the access or transaction system for which they were designed. The connection between the transaction system and the smart card's computer chip may be via direct physical contact (e.g., in the case of a contact-type smart card), remotely via a contactless electromagnetic interface (e.g., in the case of a contactless-type smart card), or a combination thereof.

With a contact-type smart card, a conductive contact plate having one or more contact points is provided on a surface of the smart card. The contact points allow the computer chip in the smart card to make a direct connection with a smart card reader when the smart card is inserted into the reader. Once the physical connection is made, the transmission of data, commands, or card status, may take place via the physical contact points between the smart card and the card reader.

In contrast to contact-type smart cards, a contactless-type smart card is provided with an antenna embedded within the card that allows for communication (e.g., transfer of data) with a receiving antenna of the smart card reader. A contactless-type smart card need not be physically contacted with the card reader, it usually must be positioned sufficiently close to the smart card reader to allow the reader to communicate with the card. Contactless-type smart cards are typically dependent on an outside power source, and thus the power for the computer chip within the contactless smart card is often derived via the electromagnetic signal received by the antenna embedded within the smart card.

Two other types of smart cards, derived from the contact and contactless smart cards, are the combi and hybrid smart cards. The combi smart card has a single embedded computer chip that allows for both a contact and a contactless interface. The hybrid card, however, has two chips. One chip is provided with a contact interface, whereas the other chip is provided with a contactless interface.

The computer chips of smart cards are small and have a limited data storage capacity. Consequently, the continuing need to store ever-increasing amounts of information (e.g., programs or data) within the computer chip of the smart card can place significant limitations on the design of the overall smart card system, especially because increasing the storage capacity of the computer chip on the card is usually accompanied by relatively high costs. In addition, because the International Standards Organizations ("ISO") sets guidelines regarding the physical size of smart cards (i.e., ISO 7810), among other things, an increase in the storage capacity of the smart card should not be allowed to increase the physical size of the smart card to such an extent that the resulting smart card is not in compliance with the aforementioned ISO standards.

### Summary of the Invention

Apparatus according to one embodiment of the invention comprises a substrate, a processor provided on the substrate, and a computer-readable medium provided on the substrate. An access device operatively associated with the substrate interfaces with the processor and the computer-readable medium provided on the substrate.

Also disclosed is a method that according to one embodiment of the invention comprises the steps of: Reading data from a computer-readable medium on a substrate; reading a decryption algorithm from a processor on the substrate; and decrypting the data using the decryption algorithm.

### Brief Description of the Drawing

Illustrative and presently preferred embodiments of the invention are shown in the accompanying drawing in which:
Figure 1 is a plan view of storage apparatus according to one embodiment of the invention;
Figure 2 is a diagram illustrating the components of an access system in which the storage apparatus shown in Figure 1 may be used according to one embodiment of the invention;
Figure 3 illustrates the relationship between Figures 3A and 3B;
Figures 3A and B form a flow chart illustrating an embodiment of a method that may be used in the access system shown in Figure 2;
Figure 4 is a diagram illustrating the components of a second embodiment of an access system in which the storage apparatus may be used;
Figure 5 is a flow chart illustrating an embodiment of a method that may be used in the access system shown in Figure 4;
Figure 6 is a flow chart illustrating a method that may be used in the access system shown in Figure 4;
Figure 7 is a diagram illustrating the components of a third embodiment of an access system in which the storage apparatus may be used;
Figure 8 is a flow chart illustrating a method that may be used in the access system shown in Figure 7;
Figure 9 is a flow chart illustrating a method that may be used in the access system shown in Figure 7;
Figure 10 is a diagram illustrating the components of a fourth embodiment of an access system in which the storage apparatus may be used;
Figure 11 is a diagram illustrating the components of a network in which the storage apparatus may be used; and
Figure 12 is a diagram illustrating the components of a network in which the storage apparatus may be used.

### Detailed Description of the Invention

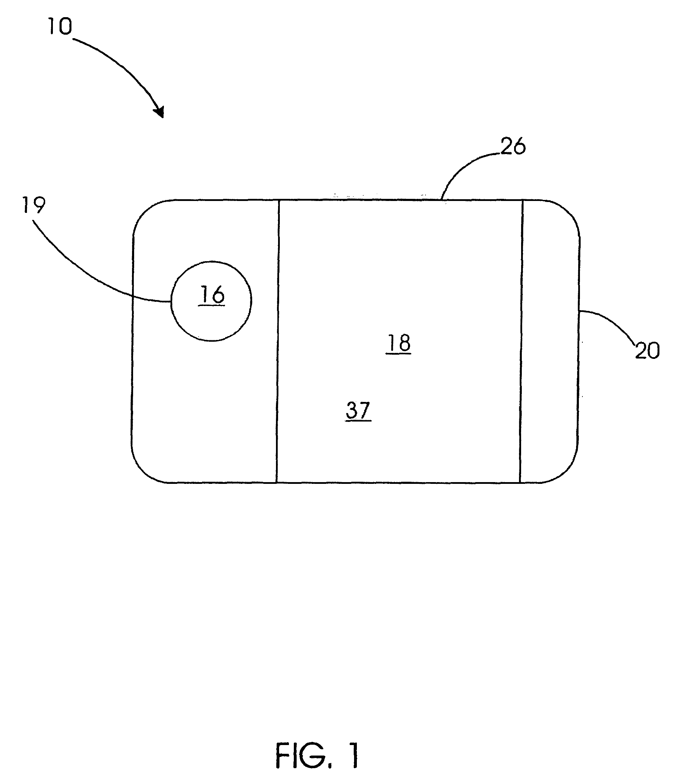

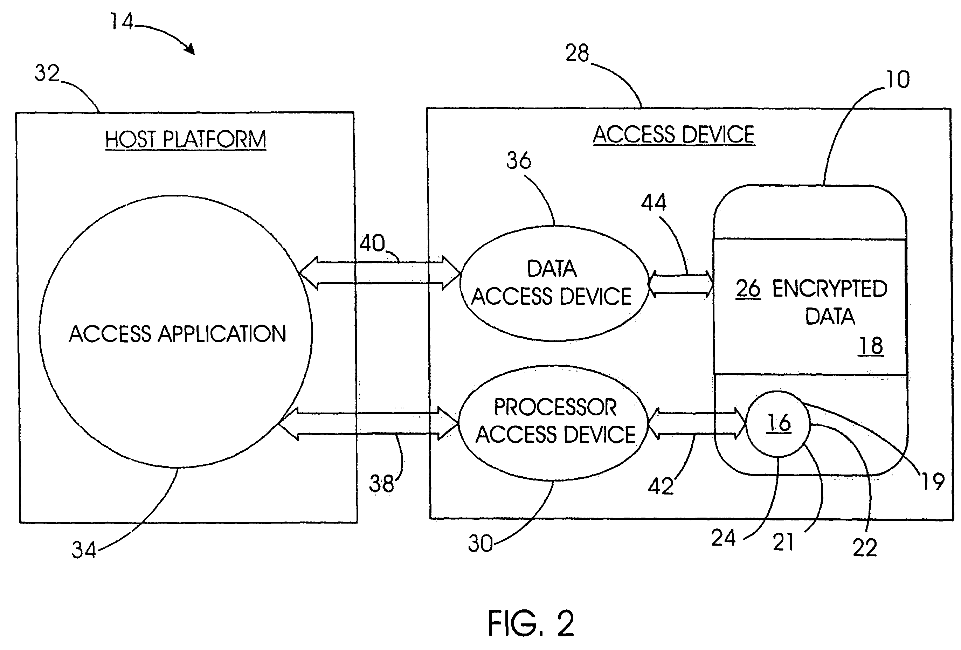

One embodiment of an storage apparatus 10 is best seen in Figures 1 and 2 and may comprise a substrate 20 having processor 16 and a computer-readable storage medium 18 provided thereon. The processor 16 may be used to perform certain data processing functions and/or commands in a manner that will be described in much greater detail below. In addition, the processor 16 may be used to store certain types of information or chip data (shown notionally at 19). The computer-readable storage medium 18 provided on the storage apparatus 10 may be used to store other types of information or data (shown notionally at 26). In one preferred embodiment, the computer-readable storage medium portion 18 of the storage apparatus 10 is used to store large amounts of data 26 that would otherwise exceed the data storage capacity of the processor portion 16.

With reference now primarily to Figure 2, an access or transaction system 14 operatively associated with the storage apparatus 10 interfaces with the processor 16 and the computer-readable storage medium 18 provided on the storage apparatus 10 in order to read data (e.g., chip data 19 or data 26) from, or write data to, the storage apparatus 10. As will be described in greater detail below, the storage apparatus 10 and related access or transaction system 14 may be used in any of a wide variety of applications to perform any of a wide variety of functions. For example, in one embodiment, the storage apparatus 10 takes the form of a smart card, i.e., the substrate 20 is sized to conform to the applicable smart card standard relating to the physical size of the card.

The access or transaction system 14 may comprise an access device 28 and a host platform 32. The access device 28 is used to access (i.e., interface with) the storage apparatus 10. The access device 28 may comprise a processor access device 30 and a data access device 36. As will be described in greater detail below, many different configurations or architectures are possible for the function and operation of the chip access device 30 and the data access device 36. For example, in the embodiment illustrated in Figure 2, the processor access device 30 interfaces with the processor 16 provided on the storage apparatus 10. Data and/or commands may be exchanged between the processor access device 30 and the processor 16 via data or communication link 42. The data access device 36 interfaces with the computer-readable storage medium 18 via data or communication link 44. The data access device 36 may be used to write data 26 to, or read data 26 from, the computer-readable storage medium 18 of the storage apparatus 10.

The access device 28 may communicate with an access application 34 provided on the host platform 32 via a suitable data or communication link or links. For example, in the configuration or architecture illustrated in Figure 2, the processor access device 30 communicates with the access application 34 via communication or data link 38, whereas the data access device 36 communicates with the access application 34 via communication or data link 40.

The storage apparatus 10 and related access system 14 may be used in any of a wide variety of applications. For example, in one embodiment wherein the storage apparatus 10 may be used in the distribution of creative works (e.g., films, documentaries, movies, music, software, or literary works). The desired creative work could be transferred or downloaded to the computer-readable medium portion 18 of the storage apparatus or card 10. Optionally, and before distributing the data storage card 10 and desired work provided thereon, suitable or desirable copyright protection systems could be provided to the processor 16 of the storage apparatus or card 10. Because each provider can control the processors of its storage cards, each provider could also exercise control over the level of security that would be afforded to the work contained on its storage apparatus. Moreover, in the event of a breach of security, the storage apparatus would provide the provider with the ability to quickly address that breach (such as, for example, by changing the security system contained within the processor).

The storage apparatus 10 may be distributed with a blank or empty computer-readable storage medium 18 thereon into which data may later be added. For example, a consumer may purchase a blank storage apparatus 10 then use kiosk or other download system to download desired data or content to the computer-readable storage medium portion 18 of the storage apparatus 10. Alternatively, the storage apparatus 10 may be distributed with the desired content already provided thereon. The content provider may also allow the user to purchase certain rights associated with the content contained on the storage apparatus, such as, for example, the right to enjoy the desired content once or multiple times, the right to copy the content once or multiple times, or the right to modify the content. Because the content rights policy of each provider may be linked to its content by way of the processor portion 16 of the storage apparatus 10, the storage apparatus 10 provides an easy way to support the capability of mixing the content of different providers even though one or more of the providers may be using different copyright protection systems for their content.

The preceding new application paradigms are for illustrative purposes only and are not intended to limit the invention. Indeed, other uses for the storage apparatus are possible in any of a wide range of application areas such as telephony, mass transportation, financial, banking, retail, computer network user authentication and repudiation, identification, or health care.

Having briefly described the storage apparatus 10 as it could be used to store and manage data according to one embodiment of the invention, various embodiments of the storage apparatus 10 will now be described in detail. The storage apparatus 10 may be embodied in other substrates, objects, and media, including but not limited to, compact discs (e.g., CD-R, or CD-RW), digital video discs (e.g., DVD-R, or DVD-RW), or MiniDiscs, and in any of a wide range of applications, now known, envisioned, or that may be developed in the future. Consequently, the storage apparatus 10 according to the present invention should not be regarded as limited to the particular embodiments, environments, and applications that are shown and described herein.

One embodiment of the storage apparatus 10 in Figures 1 and 2 may comprise a generally rectangularly-shaped substrate 20 in the shape or configuration of a smart card. More specifically, the substrate 20 is sized to satisfy the ISO 7810 standards that relate to the physical size requirements for smart cards. Alternatively, other shapes and sizes for the substrate may be used. For example, in another embodiment, the substrate 20 could be in the form of a circularly-shaped disk. Consequently, embodiments of the present invention should not be regarded as limited to substrates (e.g., substrate 20) having any particular size or configuration.

The substrate 20 may be fabricated from any of a wide range of materials now known in the art or that may be developed in the future that would be suitable for the particular application. By way of example, in one preferred embodiment, the substrate 20 may be fabricated from any of a wide range of suitable materials that satisfy the ISO 7816 standards.

The storage apparatus 10 may further comprise the processor 16 provided on the substrate 20. As will be described in greater detail below, the processor 16 may provide the storage apparatus 10 with memory capabilities (e.g., silicon memory capacity) and data management capabilities (e.g., data processing, data protection, access control, data security features, data compression/decompression, data transmission, metadata, data retrieval, or file systems). The processor 16 may comprise any of a wide range of processor devices. By way of example, in one preferred embodiment, the processor 16 comprises a silicon microcomputer chip having both a processor portion (not shown) for processing data and a memory portion (also not shown) for storing chip data 19. The chip data may comprise programming data that embody one or more programs, such as security and copy protection systems, file compression/decompression systems, or file systems, as well as other types of data.

In the embodiment shown in Figure 2, the processor 16 is also provided with an encryption system 21 that includes an encryption key 22 and a decryption algorithm 24. As will be described in greater detail below, the processor 16 may transmit to an access application 34 the encryption key 22 and decryption algorithm 24 so that the same may later be used by the access application 34 to decrypt or decipher data. Preferably, the encryption key 22 and decryption algorithm 24 are embodied in firmware and/or software (i.e., computer-readable program code), although this is not required. It is also generally preferred, but not required, that the computer-readable program code comprise a platform independent language, such as JAVA. The encryption key 22 and the decryption algorithm 24 may be selected from any of a wide range of well-known encryption keys and decryption algorithms.

The substrate 20 may also be provided with a conductive contact plate (not shown) having contact points (also not shown), to allow the embedded processor 16 to be connected to the processor access device 30 of the access system 28. Alternatively, the processor 16 and the processor access device 30 each may be provided with an antenna (not shown) to allow the processor 16 and the processor access device 30 to communicate with each other. In yet another embodiment, the processor 16 and the processor access device 30 may be provided with suitable optical apparatus (not shown) to allow the two devices to communicate via light.

As described above, the substrate 20 of the storage apparatus 10 is also provided with at least one computer-readable storage medium 18 thereon. The computer-readable storage medium 18 may be used to store data, and particularly data in excess of the data storage capacity of the processor 16, although this is not required. The computer-readable storage medium 18 may comprise any of a wide variety of computer-readable storage media. In one preferred embodiment, the computer-readable storage medium 18 comprises an optical storage medium that may be written to and read from by suitable optical apparatus (e.g., a laser) well-known in the art. Alternatively, the computer-readable storage medium 18 may comprise other types of media, such as magnetic media, magneto-optical media, or holographic media.

In the embodiment illustrated in Figures 1 and 2, the computer-readable storage medium 18 is provided on a first side 37 of the substrate 20. Alternatively, the computer-readable storage medium 18 could be provided on the reverse side of the substrate 20, or even on both sides of the substrate 20. In still another alternative arrangement, one type of computer-readable storage medium 18 (e.g., optical) may be provided on the first side 37 of the substrate 20, whereas another type of computer-readable storage medium 18 (e.g., magnetic) may be provided on the reverse side of the substrate 20. Moreover, different types of computer-readable storage media may be provided on the same side (e.g., the first side 37) of the substrate 20. In the embodiment shown and described herein wherein the computer-readable storage medium 18 comprises an optical medium, an encapsulation layer or protective cover may be provided to protect the optical storage medium from dust or scratches.

An access or transaction system 14 (Figure 2) is provided to interface with the storage apparatus 10. The access system 14 may comprise an access device 28 and a host platform 32. The access device 28 is used to access or interface with the storage apparatus 10, whereas the host platform 32 interfaces with the access device 28 in order to provide the desired functionality of the system. In one embodiment, the access device 28 may comprise a card reader having an insert slot sized to at least partially receive the storage apparatus 10. In another embodiment utilizing a contactless type of arrangement, the card reader portion of the access device could comprise a simple panel or area on a panel. The storage apparatus 10 could then be interfaced with the access device 28 by simply placing the storage apparatus 10 adjacent the panel or designated area on the panel.

In any event, once the storage apparatus 10 is positioned in operative relationship to the access device 28 (e.g., when the substrate 20 is inserted into the slot of the access device 28, or when the substrate 20 is positioned adjacent the card reader panel of the access device 28), the access device 28 may access the processor 16 and/or the computer-readable storage medium 18 provided thereon. In one preferred embodiment, the access device 28 comprises a processor access device 30 and a data access device 36. When the storage apparatus 10 is engaged with the access device 28, the processor access device 30 may access the processor 16, whereas the data access device 36 may access the computer-readable storage medium 18.

With regard to the data access device 36, the particular type and kind of device used will depend on the type of computer-readable storage medium (or media) 18 that is provided on the storage apparatus 10. As mentioned earlier, in one embodiment, the storage apparatus 10 is provided with an optical storage medium (e.g., 18). In such an embodiment, the data access device 36 may comprise an optical data access device or optical "head" that is capable of reading data from and writing data to the particular optical storage medium utilized. Moreover, because the storage apparatus 10 may be provided with optical storage media on each of the two opposed sides (e.g., first side 37, and reverse side) of the substrate 20, the data access device 36 may comprise two optical heads, one for accessing the optical storage medium on each of the two sides of substrate 20. Alternatively, the data access device 36 may comprise a single optical head, and the manner in which the storage apparatus 10 is engaged with the access device 28 (e.g., how the storage apparatus 10 is inserted into the access device 28) will determine which side of the substrate 20 and optical storage medium thereon is accessible to the optical head of data access device 36.

The transaction or access system 14 may further comprise a host platform 32 having an access application 34 operating or being hosted thereon. As will be explained in greater detail below, the access application 34 may request and ultimately obtain access to the processor 16 and/or the computer-readable storage medium 18. The access application 34 may be embodied in hardware, firmware and/or software (i.e., hardware and/or computer-readable program code). The firmware and/or software may be stored within any suitable computer-readable storage medium (not shown). It is understood that the computer-readable program code that may comprise the access application 34 may be a stand-alone application, a plug-in module, otherwise combined with an existing application and/or operating system.

To allow the access application 34 to interact or interface with (i.e., to access) the storage apparatus 10, the access application 34 may be in communication with the access device 28. The access application 34 may be able to send to and receive from the access device 28 data and/or commands. Upon receipt thereof, the access device 28 may in turn relay or send the data and/or commands to the storage apparatus 10.

In the embodiment shown in Figure 2, the host application 32 is linked to the access device 28 via two independent paths or links 38 and 40, one for each of the respective sub-devices 30 and 36 comprising the access device 28. More specifically, the access application 34 may send to and receive from the processor access device 30 both data and commands via the bi-directional link 38. The access application 34 may send to and receive from the data access device 36 both data and commands via the bi-directional link 40. Upon receipt of the data and/or commands from the access application 34, the processor access device 30 may send data and/or commands to the processor 16 via a bi-directional link 42, and the data access device 36 may send (i.e., write) data to and/or receive (i.e., read) data from the computer-readable storage medium 18 via a bi-directional link 44.

The components shown in Figure 2 are merely illustrative of the various aspects of the invention should not be regarded as limited to the specific arrangement illustrated in Figure 2. For example, the access device 28 and the host platform 32 need not be separate units and can be combined, or alternatively, the access device 28 and the host platform 32 can be separately housed and linked to one another over a remote network (e.g., Internet, Intranet, LAN, or WAN) or other suitable connection. In the latter embodiment, the links 38 and 40 may comprise any suitable connection means (e.g., modem, T-1, digital subscriber line (DSL), or infrared), other devices (e.g., routers, or hubs), other networks (e.g., LAN, or Intranet). In an alternative embodiment, the host platform 32 and the access device 28 may each be provided with communication ports to allow data and/or commands to be transferred or "downloaded" between the access application 34 and the processor access device 30 and between the access application 34 and the data access device 36. While any of a wide range of well-known communication ports and formats may be utilized, in one embodiment, the host platform 32 and access device 28 may be provided with universal serial bus (USB) ports. In such an embodiment then, the links 38 and 40 may comprise interconnection cables plugged into the USB ports through which the access application 34 communicates with the respective sub-devices 30 and 36 of access device 28. Alternatively, the host platform 32 and access device 28 may instead be provided with infra red (IR) serial ports and the communications between the host platform 32 and sub-device 30 and between the host platform 32 and sub-device 36 may be wireless. The communications may take place without the need for an interconnection wire or cable.

As described above, the bi-directional link 42 may comprise the contact points on the conductive plate that allow the processor 16 and the processor access device 30 to communicate with each other. In another embodiment, the bi-directional link 42 may comprise antennae provided to the processor 16 and provided to the processor access device 30 that would allow the processor 16 and the processor access device 30 to communicate with each other. In yet another embodiment, the bi-directional link 42 may comprise light through which the processor 16 and the processor access device 30 communicate. It is understood that bi-directional link 42 may also comprise any of a wide range of other suitable means, now known or later developed, that would allow for communication between the processor 16 and the processor access device 30.

With regard to bi-directional link 44, the type of data access device 36 that is used to access the computer-readable storage medium 18 may ultimately determine what comprises the bi-directional link 44. For example, in one embodiment, the data access device 36 may comprise an optical head, and thus the bi-directional link 44 may comprise a contactless optical interface (e.g., a laser) through which information may travel.

In operation, the access application 34 may seek to access the processor 16 and/or the computer-readable storage medium 18. If the access application 34 wants to access the processor 16, the access application 34 may send an access request over link 38 to the processor access device 30. In response thereto, the processor access device 30 may relay the request via link 42 to the processor 16. The processor 16 may then transmit chip data 19 to the processor access device 30 through link 42. Prior to sending the chip data 19 to the processor access device 30, however, the processor 16 may perform one or more data management processes on the chip data 19. For example, the processor 16 may, among other things, process the chip data 19, add metadata to the chip data 19, compress the chip data 19, decompress the chip data 19, encrypt the chip data 19, or decrypt the chip data 19, before sending the chip data 19 to the processor access device 30. Upon receipt of the chip data 19, the processor access device 30 may then transmit the chip data 19 to the access application through link 38.

If the access application 34 wants to access the computer-readable storage medium 18, the access application 34 may send a data request to the data access device 36 over link 40. In response thereto, the data access device 36 may obtain or read the data 26 from the computer-readable storage medium 18 through link 44. After obtaining the data 26, the data access device 36 may send the data 26 to the access application 34 by way of link 40.

Preferably, the storage apparatus 10 is provided with some level of security to protect against unauthorized access to the processor 16 and/or to protect against unauthorized access to the computer-readable storage medium 18. For example, the security of the chip data 19 may be directly handled by the processor 16. In one embodiment, the processor 16 may be provided with the encryption system 21 that may be used to encrypt the chip data 19 within the processor 16. Unless a request for access to the chip 19 was authorized, the chip data 19 would remain encrypted. Alternatively, other methods for protecting and maintaining security of the chip data 19 are also possible as would be obvious to persons having ordinary skill in the art after having become familiar with the teachings of the present invention.

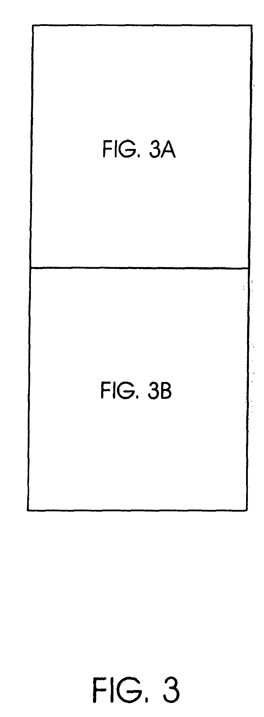

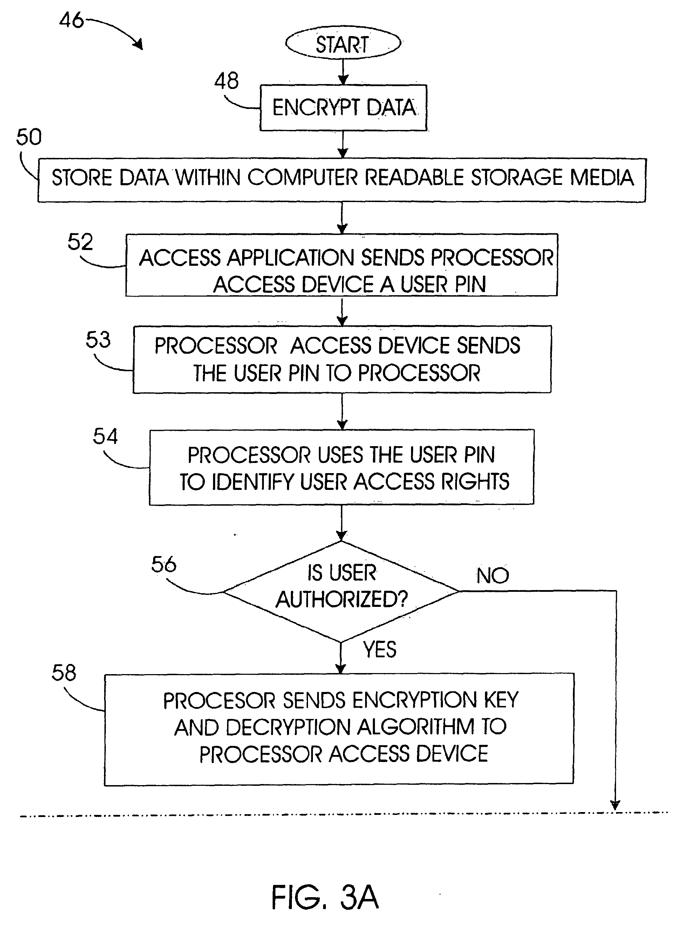

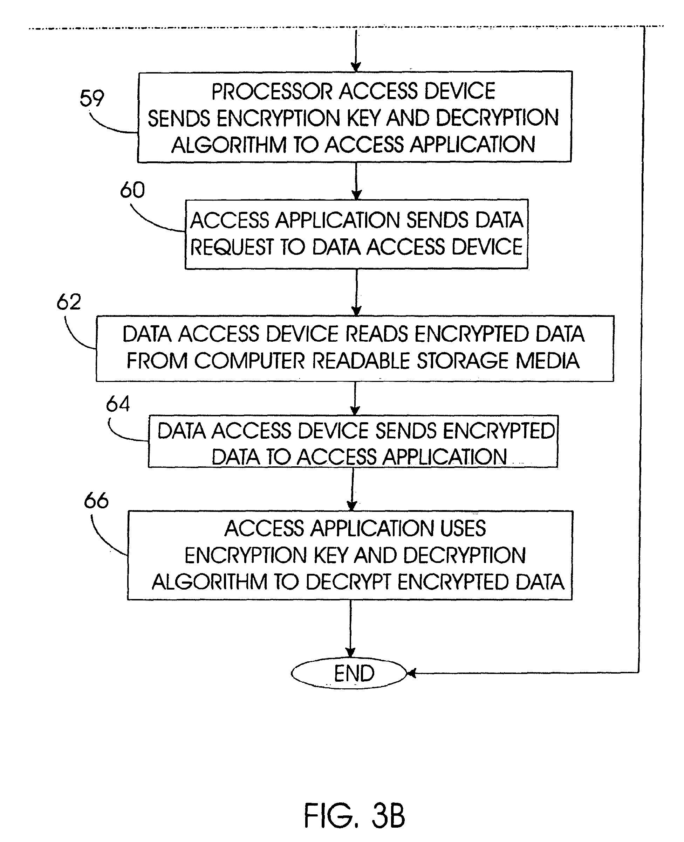

With regard to the computer-readable storage medium 18, security and/or management thereof may be implemented in accordance with a method 46 illustrated in Figures 3A and 3B. In the first step 48 of method 46, the data 26 may be encrypted before it is stored in the computer-readable storage medium 18 at step 50. In one embodiment, the encryption system 21 may be used to encrypt the data 26. Assuming now that the access application 34 wants access to the data 26 stored within the computer-readable storage medium 18, the access application 34 may first transmit a user personal identification number ("PIN") to the processor access device 30 via link 38 (step 52). Upon receipt, the processor access device 30 may transmit (step 53) the user PIN to the processor 16 via link 42. In the next step 54, the processor 16 uses the user PIN to identify the user access rights associated with that particular PIN so that the processor 16 may make a determination at step 56 as to whether the data access request is authorized (i.e., does the user associated with the PIN have authority to access the computer-readable storage medium 18). If the data access request is authorized (i.e., the user is successfully identified), the processor 16 sends via link 42 (step 58) the encryption key 22 and decryption algorithm 24 to the processor access device 30, which then sends the encryption key 22 and decryption algorithm 24 to the access application 34 by way of link 38 (step 59). Upon receipt of the encryption key 22 and decryption algorithm 24, the access application 34 at step 60 may then request the data 26 from the data access device 36 via link 40. In response thereto, the data access device 36 may read the encrypted data 26 from the computer-readable storage medium 18 by way of link 44 (step 62) and send the encrypted data 26 to the access application 34 by way of link 40 (step 64). After receiving the encrypted data 26, the access application 34 may use the encryption key 22 and the decryption algorithm 24 to decrypt or decipher the encrypted data 26 (step 66).

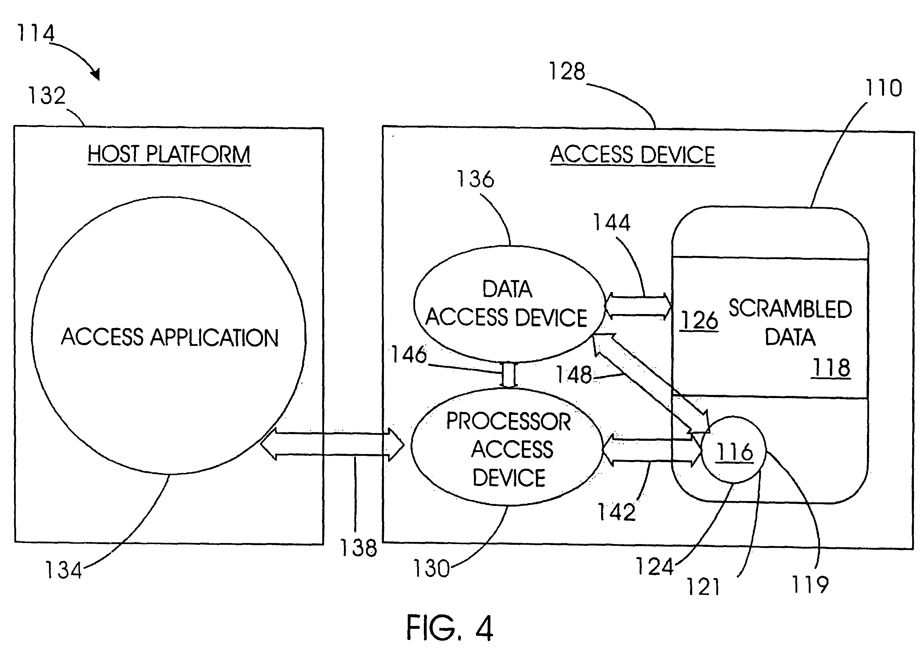

A second embodiment 114 of a system that may be used to access the data management and storage components (e.g., processor 116, computer-readable storage medium 118) of apparatus 110 is illustrated in Figure 4. In the second system embodiment or access control architecture 114, there is a single bi-directional link 138 between the host platform 132 and the processor access device 130 of the access device 128. By using the link 138, the access application 134 may send to and receive from the processor access device 130 both data and commands. Upon receipt of the data and/or commands from the access application 134, the processor access device 130 may send to and receive from the processor 116 both data and commands via a bi-directional link 142, and/or the processor access device 130 may send data to and receive data from the data access device 136 via a bi-directional link 146.

In addition to being linked to the processor access device 130, the data access device 136 may also be directly linked to the processor 116 via a bi-directional link 148 that allows commands to be transmitted therebetween. The data access device 136 may write data 126 to and read data 126 from the computer-readable storage medium 118 via a bi-directional link 144.

In operation, if the access application 134 wants to access the chip data 119, the access application 134 may first send a request for the chip data 119 over link 138 to the processor access device 130. In response thereto, the processor access device 130 may relay the request via link 142 to the processor 116. The processor 116 may transmit the requested chip data 119 to the processor access device 130 via link 142. Prior to sending the chip data 119 to the processor access device 130, however, the processor 116 may perform one or more data management processes on the chip data 119. For example, the processor 116 may, among other things, process the chip data 119, add metadata to the chip data 119, compress the chip data 119, decompress the chip data 119, encrypt the chip data 119, or decrypt the chip data 119, before sending the chip data 119 to the processor access device 130. Upon receipt of the chip data 119, the processor access device 130 may then forward the chip data 119 to the access application 134 via link 138.

Assuming now, however, that the access application 134 requested the data 126 within the computer-readable storage medium 118. The access application 134 may again first send a data request over link 138 to the processor access device 130. In response thereto, the processor access device 130 may relay the data request via link 142 to the processor 116. The processor 116 may then pilot or guide the data access device 136 to control how the data access device 136 reads the data 126 from the computer-readable storage medium 118. The data access device 136 may then send the data 126 it acquired to the processor access device 130 via link 146. The processor access device 130 may then send the data 126 to the access application 134 via link 138.

As before with the first system embodiment 14, the processor 116 of the second system embodiment 114 may be used to provide some level of security for the processor 116 and the contents thereof (e.g., by using an encryption system 121 or other protection system). With regard to the computer-readable storage medium 118, the processor 116 may also be provided with some means for protecting and managing the data 126 within the computer-readable storage medium 118. For example, in the embodiment shown and described herein, the processor 116 may be provided with a data-scramble algorithm 124. Alternatively, other suitable means for protecting and managing the data 126 may be provided to the processor 116.

The data-scramble algorithm 124 may be used by the processor 116 when the processor 116 is piloting the data access device 136 so that the data 126 is scrambled when the data 126 is written to the computer-readable storage medium 118 by the data access device 136. Conversely, the processor 116 may also use the data-scramble algorithm 124 when piloting the data access device 136 so that the data 126 is unscrambled when it is read from the computer-readable storage medium 118 by the data access device 136.

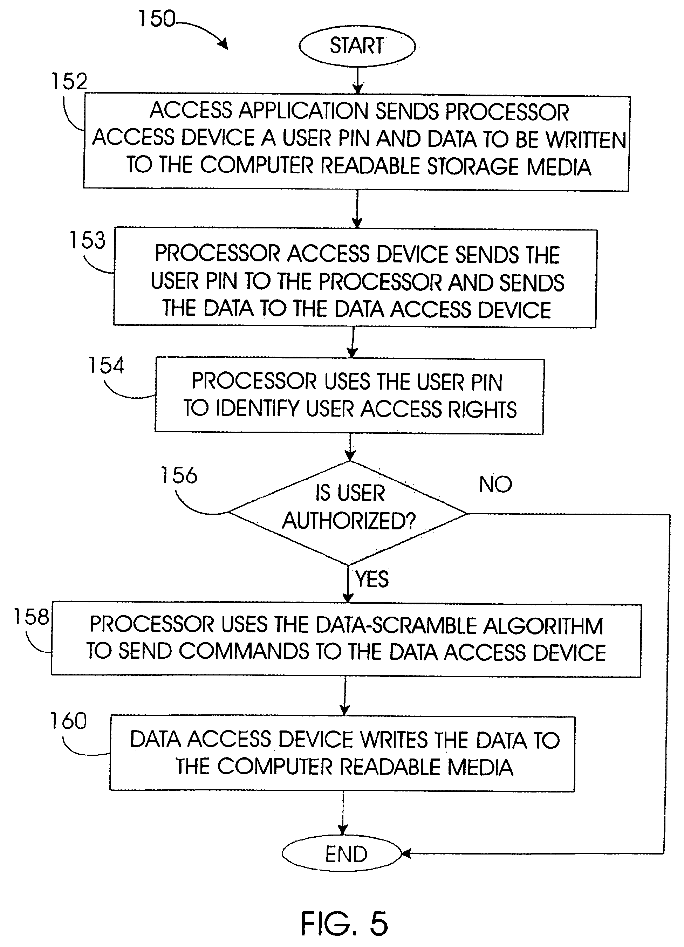

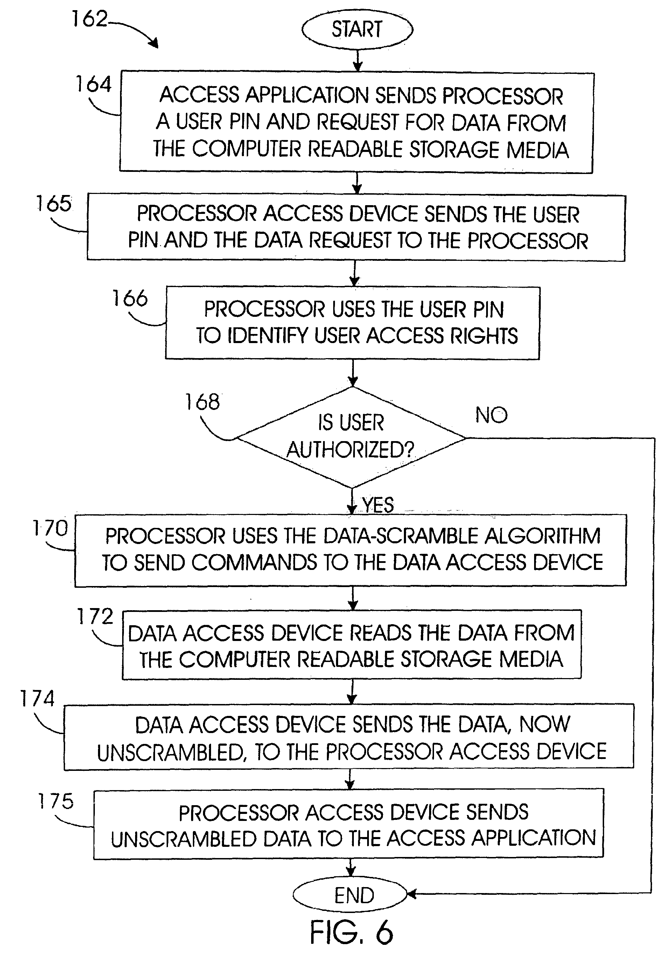

To implement the security and/or management features for the computer-readable storage medium 118 in this second embodiment 114, the data 126 may be written in accordance with a method 150 illustrated in Figure 5 and may be read in accordance with a method 162 illustrated in Figure 6. Figures 5 and 6 are merely illustrative and are not intended to limit the teachings of the present invention.

In the first step 152 of method 150, the access application 134 may send the processor access device 130 via link 138 a user PIN and data 126 that is to be written to the computer-readable storage medium 118. At step 153, the processor access device 130 may then transmit the user PIN to the processor 116 via link 142 and the data 126 to the data access device 136 via link 146. In the next step 154, the processor 116 uses the user PIN to identify the user access rights associated with the user PIN so that the processor 116 may make a determination at step 156 as to whether the user is authorized to have the data 126 written to the computer-readable storage medium 118. If the user is authorized (i.e., the user is successfully identified), the processor 116 uses the data-scramble algorithm 124 to send appropriate commands via link 148 to the data access device 136 (step 158). Upon receipt of the commands from the processor 116, the data access device 136 at step 160 writes the data 126 to the computer-readable storage medium 118 in accordance with those commands. Step 160 results in the data 126 being scrambled at the surface of the computer-readable storage medium 118. In other words, the data 126 is stored within the computer-readable storage medium 118 in such a way that makes the data 126 non-understandable when that data 126 is read continuously.

To obtain unscrambled data from the computer-readable storage medium 118, the data 126 may be read in accordance with the method 162 shown in Figure 6. In the first step 164 of method 162, the access application 134 may send the processor access device 130 via link 138 a user PIN and a data request for the data 126. At step 165, the processor access device 130 may transmit the user PIN and the data request to the processor 116 via link 142. In the next step 166, the processor 116 uses the user PIN to identify the user access rights associated therewith so that the processor 116 may make a determination at step 168 as to whether the user has authority to obtain the data 126 that is stored within the computer-readable storage medium 118. If the user is authorized (i.e., the user is successfully identified), the processor 116 uses the data-scramble algorithm 124 to send commands via link 148 to the data access device 136 (step 170). Upon receipt of the commands from the processor 116, the data access device 136 at step 172 reads the data 126 from the computer-readable storage medium 118 in accordance with those commands so that the data 126 is unscrambled. At step 174, the data access device 136 sends the data 126, now unscrambled, to the processor access device 130 via link 146. The processor access device 130 then sends the data 126 to the access application 134 by way of link 138 at step 175.

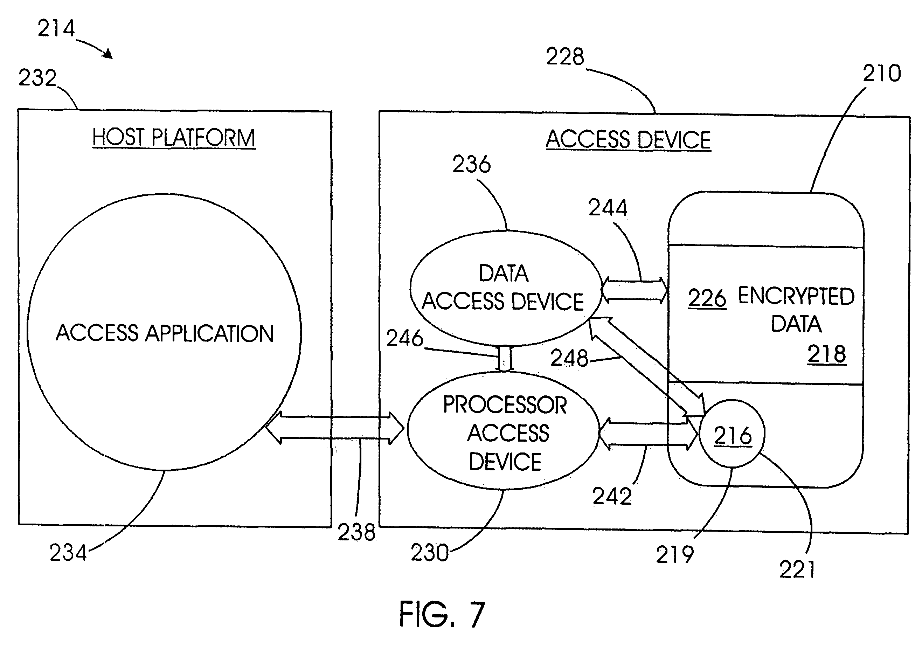

A third embodiment 214 of a system that may be used to access the data management and storage components (e.g., processor 216, computer-readable storage medium 218) of apparatus 210 is illustrated in Figure 7. In the third embodiment or data control architecture 214, a single bi-directional link 238 between the host platform 232 and the access device 228 allows for the transfer of both data and commands. Unlike the second embodiment 114, however, the processor 216 may be part of the data path between the access application 234 and the computer-readable storage medium 218. More specifically, the data access device 236 may be linked to the computer-readable storage medium 218 via a bi-directional link 244 that allows the data access device 236 to read data 226 from and write data 226 to the computer-readable storage medium 218. After reading data 226 from the computer-readable storage medium 218, the data access device 236 may send that data 226 to the processor 216 by using a bi-directional link 248. In other words, the bi-directional link 248 may allow for the transfer of data between the processor 216 and the data access device 236.

The commands to the data access device 236 to read the data 226, however, may come from the processor access device 230 by way of a bi-directional link 246. In other words, the bi-directional link 246 may allow the data access device 236 and the processor access device 230 to exchange commands with one another. The processor access device 230 may also be able to send commands, as well as data, to the processor 216 by way of a bi-directional link 242.

To summarize then, the data path for the data 226 from the computer-readable storage medium 218 to the access application 234 comprises sequentially the link 244, the data access device 236, the link 248, the processor 216, the link 242, the processor access device 230, and finally the link 238. Because the data 226 must travel through the processor 216 in the third system embodiment 214, the processor 216 may be used to manage the data 226 before the data 226 is ultimately received by the access application 234 or written to the computer-readable storage medium 218. For example, the processor 216 may, among other things, process the data 226, add metadata to the data 226, compress the data 226, decompress the data 226, encrypt the data 226, or decrypt the data 226, before sending the data 226 to the access application 234 or the data access device 236.

In operation, if the access application 234 wants to access the chip data 219, the access application 234 may first send a request for the chip data 219 over link 238 to the processor access device 230. In response thereto, the processor access device 230 may relay the request via link 242 to the processor 216. The processor 216 may transmit the requested chip data 219 to the processor access device 230 via link 242. Prior to sending the chip data 219 to the processor access device 230, however, the processor 216 may perform one or more data management processes on the chip data 19. For example, the processor 216 may, among other things, process the chip data 219, add metadata to the chip data 219, compress the chip data 219, decompress the chip data 219, encrypt the chip data 219, or decrypt the chip data 219 before sending the chip data 219 to the processor access device 230. Upon receipt of the chip data 219, the processor access device 230 may then forward the chip data 219 to the access application 234 via link 238.

If the access application 234 requested data 226 from the computer-readable storage medium 218, then the access application 234 may again first send a request for the data 226 over link 238 to the processor access device 230. The processor access device 230 may relay the request via link 246 to the data access device 236. In response, the data access device 236 may read the data 226 from the computer-readable storage medium 218. Once acquired, the data access device 236 may then send the data 226 to the processor 216 via link 248. Optionally, the processor 216 may process the data 226. Next, the processor 216 may transmit the data 226 to the processor access device 230 via link 242. Finally, the processor access device 230 may send the data 226 to the access application 234 via link 238.

As before with the first and second embodiments 14 and 114, the processor 216 of the third embodiment 214 may be used to provide some level of security for the processor 216 and its contents. The processor 216 may also be used to provide some level of security for the computer-readable storage medium 218. For example, the processor 216 may be provided with an encryption system 221 that may be used to encrypt the chip data 219 and/or the data 226 and thus provide some protection against unauthorized access thereto. The processor 216 may also be provided with more than one encryption system. The processor 216 may be provided with a first encryption system for encrypting the chip data 219 and a second encryption system for encrypting the data 226. In either embodiment, the processor 216 would encrypt the chip data 219 and/or the data 226 before it is stored and would also decrypt the chip data 219 and/or the data 226 before sending it to the access application 234 if the access application 234 had the proper authority to access the same. Alternatively, the processor 216 may be provided with any of a wide range of other systems for protecting the chip data 219 and/or data 226 as would be obvious to persons having ordinary skill in the art after having become familiar with the teachings of the present invention.

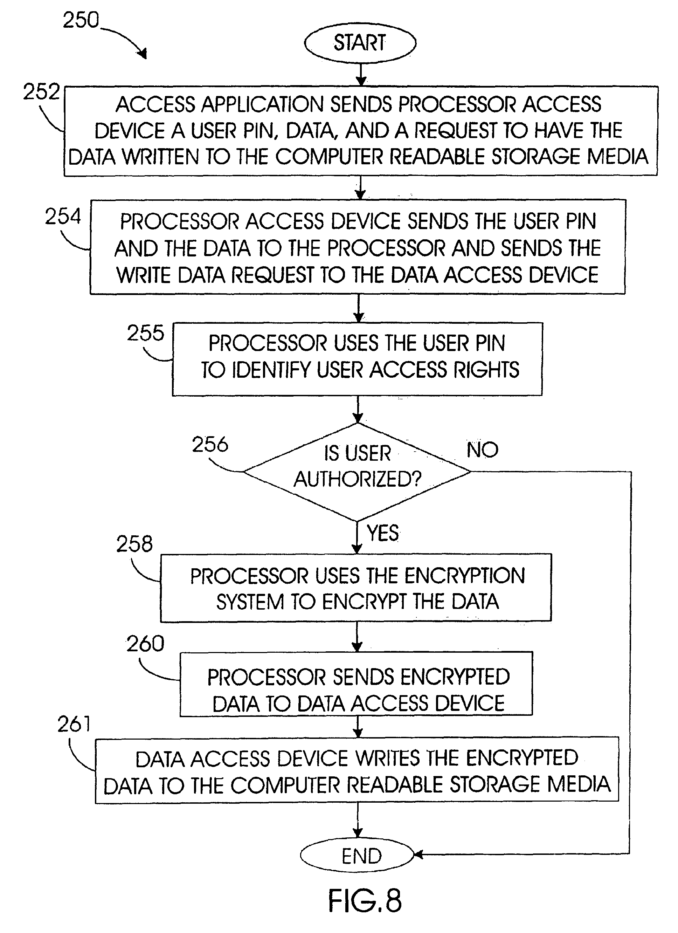

In the embodiment shown and described herein, the processor 216 may use the encryption system 221 in accordance with a method 250 illustrated in Figure 8 to encrypt the data 226 before the data access device 236 writes the data 226 to the computer-readable storage medium 218. Figure 8 is merely illustrative and is not intended to limit the teachings of the present invention.

In the first step 252 of method 250, the access application 234 may send the processor access device 230 via link 238 a user PIN, data 226, and a request ("write data request") to write the data 226 to the computer-readable storage medium 218. In the next step 254, the processor access device 230 may then transmit the user PIN and the data 226 to the processor 216 via link 242 and may transmit the write data request to the data access device 236 via link 246. At step 255, the processor 216 may use the user PIN to identify the user access rights associated with that particular PIN so that the processor 216 may make a determination at step 256 as to whether the user is authorized to have the data 226 written to the computer-readable storage medium 218. If it is determined at step 256 that the user is authorized (i.e., the user is successfully identified), the processor 216 uses the encryption system 221 to encrypt the data 226 (step 258) before sending the data 226 via link 248 to the data access device 236 (step 260). Upon receipt of the encrypted data 226 and in response to the write data request, the data access device 236 writes the encrypted data 226 to the computer-readable storage medium 218 (step 261).

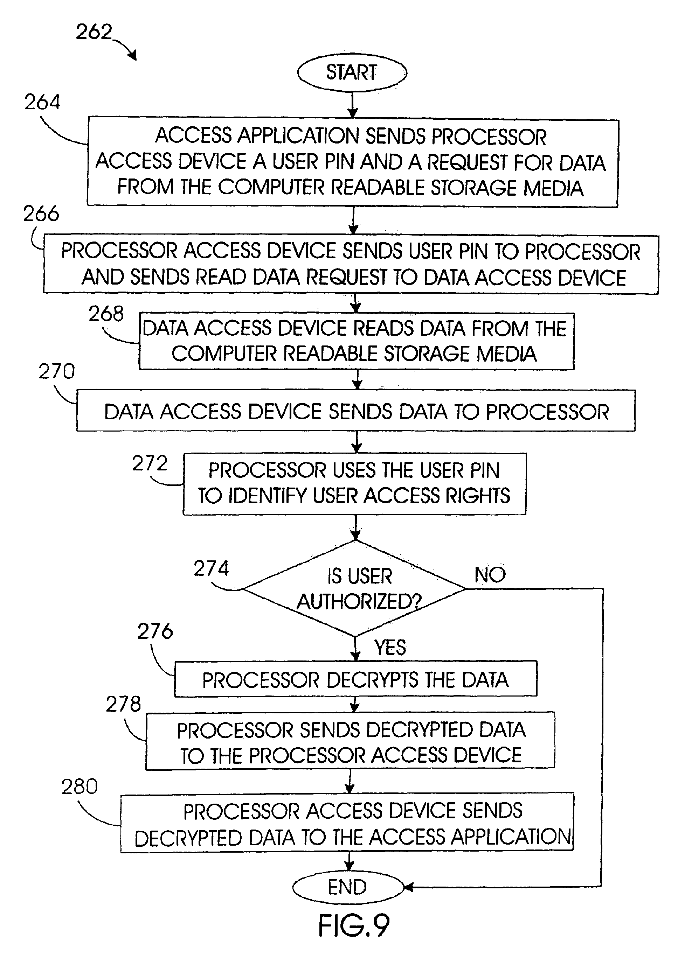

To obtain the data 226 from the computer-readable storage medium 218, the data 226 may be read in accordance with a method 262 shown in Figure 9. Figure 9 is merely illustrative and is not intended to limit the teachings of the present invention. In the first step 264 of method 262, the access application 234 may send the processor access device 230 via link 238 a user PIN and a request ("read data request") for data 226 from the computer-readable storage medium 218. In the next step 266, the processor access device 230 may transmit the user PIN to the processor 216 via link 242 and may transmit the read data request to the data access device 236 via link 246. In response to the read data request, the data access device 236 may read the data 226 from the computer-readable storage medium 218 at step 268. The data 226 may be sent by the data access device 236 to the processor 216 at step 270 via link 248. In step 272, the processor 216 uses the user PIN to identify the user access rights associated therewith so that the processor 216 may make a determination at step 274 as to whether the user has authority to obtain the data 226. If it is determined at step 274 that the user is authorized (i.e., the user is successfully identified), the processor 216 decrypts the data 226 at step 276. After the data 226 is decrypted, the processor 216 sends the decrypted data 226 to the processor access device 230 at step 278 via link 242. Finally, the processor access device 230 sends the decrypted data 226 to the access application 234 at step 280 via link 238.

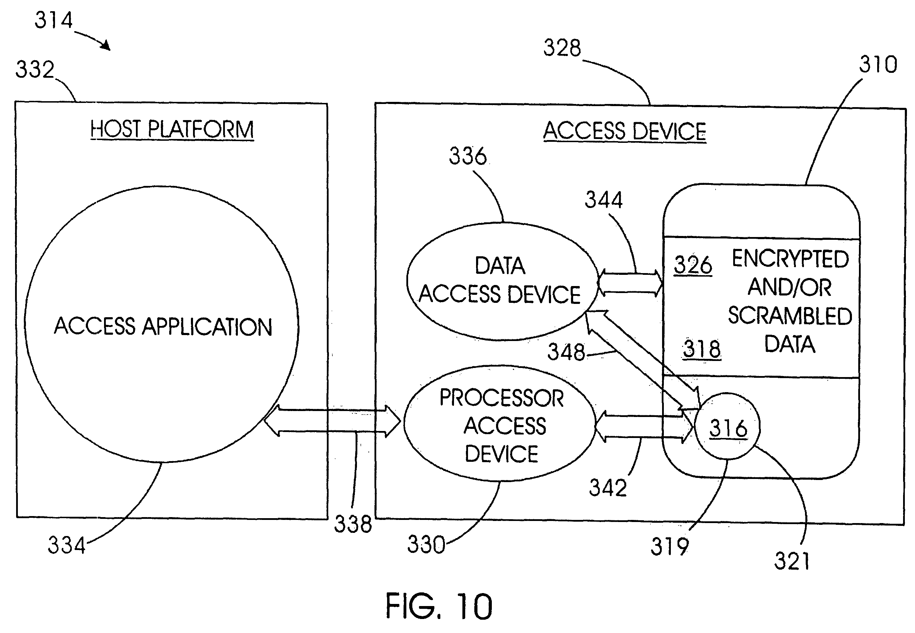

A fourth embodiment 314 of a system that may be used to access the data management and storage components (e.g., processor 316, and computer-readable storage medium 318) of apparatus 310 is illustrated in Figure 10. In the fourth embodiment or full control architecture 314, there is again a single bi-directional link 338 between the host platform 332 and the access device 328 that allows for the transfer of both data and commands. However, in the fourth embodiment 314, the processor 316 may form a part of both the data path and the command path between the access application 334 and the data access device 336.

More specifically, both the command and data paths between the data access device 336 to the access application 334 in the fourth system embodiment 314 may comprise the bi-directional link 348, the processor 316, the bi-directional link 342, the processor access device 330, and finally the bi-directional link 338. Because the data 326 must travel through the processor 316 in the fourth system embodiment 314, the processor 316 may be used to manage the data 326 before the data 326 is either received by the access application 334 or written to the computer-readable storage medium 318 by the data access device 336. For example, the processor 316 may, among other things, process the data 326, add metadata to the data 326, compress the data 326, decompress the data 326, encrypt the data 326, or decrypt the data 326 before sending the data 326 to the access application 334 or the data access device 336.

Moreover, because commands (e.g., write data requests, or read data requests) for the data access device 336 may also travel through the processor 316, the processor 316 may also be used to control or pilot the data access device 336 when the data access device 336 is either reading data 326 from or writing data 326 to the computer-readable storage medium 318.

In operation, if the access application 334 wants to access the chip data 319, the access application 334 may first send a request for the chip data 319 over link 338 to the processor access device 230. In response thereto, the processor access device 330 may relay the request via link 342 to the processor 316. The processor 316 may transmit the requested chip data 319 to the processor access device 330 via link 342. Prior to sending the chip data 319 to the processor access device 330, however, the processor 316 may perform one or more data management processes on the chip data 319. For example, the processor 316 may, among other things, process the chip data 319, add metadata to the chip data 319, compress the chip data 319, decompress the chip data 319, encrypt the chip data 319, or decrypt the chip data 319, before sending the chip data 319 to the processor access device 330. Upon receipt of the chip data 319, the processor access device 330 may then forward the chip data 319 to the access application 334 via link 338.

If the access application 334 requested data 326 from the computer-readable storage medium 318, the access application 334 may again first send a request for the data 326 over link 338 to the processor access device 330. The processor access device 330 may relay the request via link 342 to the processor 316. The processor 316 may then relay the request via link 348 to the data access device 336. In response, the data access device 336 may read the data 326 from the computer-readable storage medium 318. While the data access device 336 is reading the data 326, the processor 316 may optionally be controlling or piloting the data access device 336. In any event, once the data 326 is acquired, the data access device 336 may then send the data 326 to the processor 316 via link 348. Optionally, the processor 316 may process the data 326. Next, the processor 316 may transmit the data 326 to the processor access device 330 via link 342. Finally, the processor access device 330 may send the data 326 to the access application 334 via link 338.

As before with the first, second, and third embodiments 14, 114, and 214, the processor 316 of the fourth embodiment 314 may be used to provide some level of security for the processor 316 and the one or more computer storage medium 118. To provide such security, the processor 316 may be provided with any of a wide range of programs and/or systems for protecting the chip data 319 and/or data 326 as would be obvious to persons having ordinary skill in the art after having become familiar with the teachings of the present invention.

In the embodiment shown and described herein, the processor 316 may be provided with an encryption system 321 that may be used to encrypt the chip data 319 and/or the data 326 and thus provide some protection against unauthorized access thereto. The processor 316 may also be provided with more than one encryption system. The processor 316 may be provided with a first encryption system for encrypting the chip data 319 and a second encryption system for encrypting the data 326. In either embodiment, the processor 316 would encrypt the chip data 319 and/or the data 326 before it is stored and would also decrypt the chip data 319 and/or the data 326 before sending it to the access application 334 if the access application 334 had the proper authority to access the same.

Alternatively, or in addition to the encryption system 321, the processor 316 may be provided with a data-scramble algorithm 324. The data-scramble algorithm 324 may be used by the processor 316 when the processor 316 is piloting or controlling the data access device 336 so that the data 336 is scrambled when it is written to the computer-readable storage medium 318 by the data access device 336. Conversely, the processor 316 may also use the data-scramble algorithm 324 when piloting or controlling the data access device 336 so that the data 326 is unscrambled when it is read from the computer-readable storage medium 318 by the data access device 336.

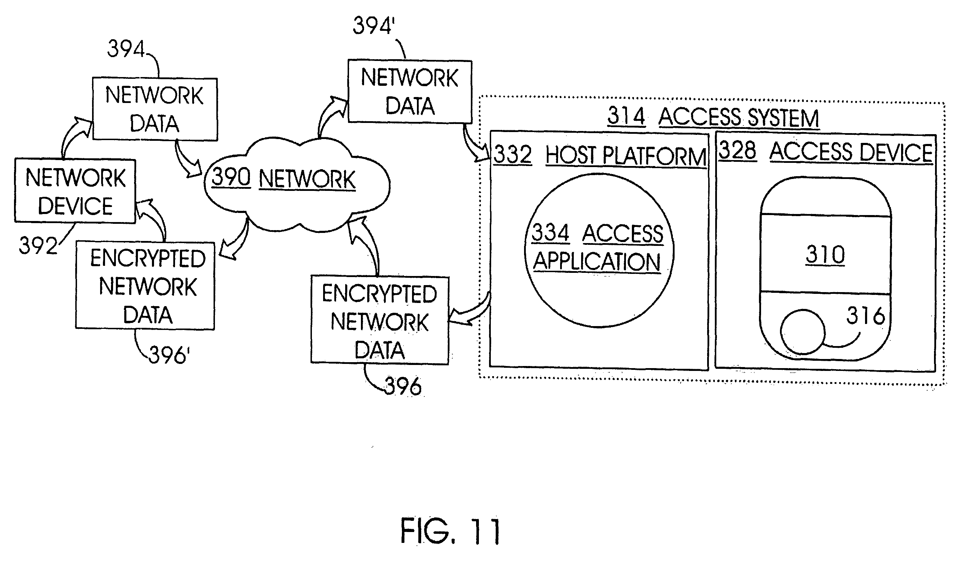

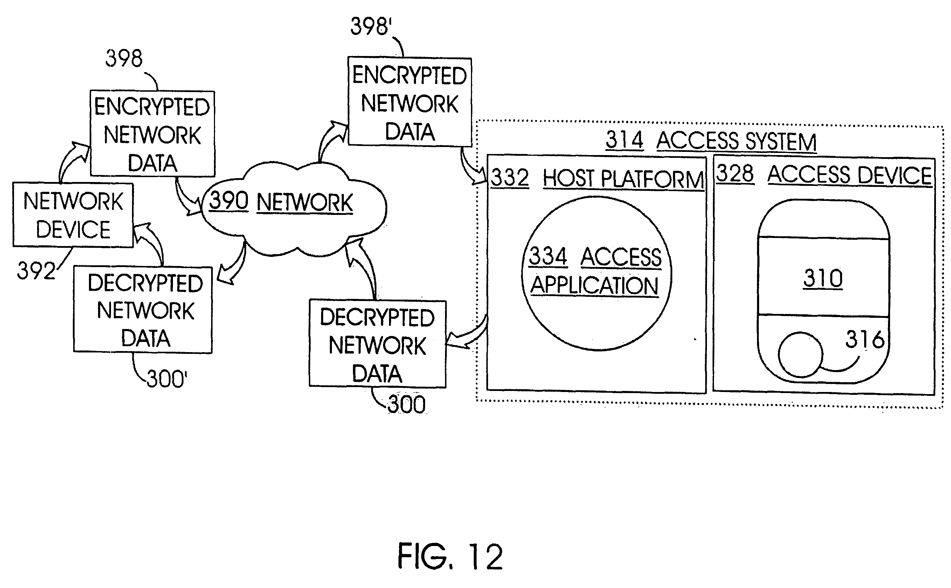

As briefly mentioned earlier, any of the various embodiments 10, 110, 210, 310 of the storage apparatus may also be used to provide hardware processing and data management capabilities. For example, in one embodiment, the storage apparatus 310 may be used to manage network data when the storage apparatus 310 is engaged with the access device 328. More specifically, and as shown in Figures 11 and 12, the host platform 332 may be operatively associated with or linked to a network 390. The network 390 may be any suitable network (e.g., a local area network (LAN), a wide area network (WAN), an Intranet, the Internet, or a combination thereof). The network 390 may include any number (i.e., one or more) of network destinations and devices (e.g., network device 392) that are operatively associated with or linked to the network 390. The network device 392 may comprise any of a wide range of systems capable of linking to the network 390 that are now known in the art or that may be developed in the future, such as a personal computer, a network server, a kiosk, a handheld device, an Internet site, a dedicated e-enabled appliance, a webTV or Internet television, a web terminal, an Internet appliance (i.e., a device dedicated to email, Internet access, and possibly other limited functions). Likewise, the network device 392 and the host platform 332 may be connected to the network 390 in any suitable manner, including but not limited to, a hardwired connection, an infrared connection, a dial-up connection (i.e., using a modem), a dedicated connection (e.g., cable, digital subscriber line (DSL), T-1, or T-3, connection), via satellite, through yet other devices (e.g., routers, or hubs), through other networks (e.g., LAN, WAN, Intranet, or the Internet), through a combination of networks. Moreover, the host platform 332 and the network device 392 need not be directly linked to the network 390 as shown in Figures 11 and 12, but either or both may instead be linked to the network 390 via one or more intermediary devices (not shown).

In such an embodiment, the storage apparatus 310 may provide data management capabilities for the network device 392. For example, during one operational sequence, illustrated in Figure 11, the storage apparatus 310 when engaged with the access system 314 may be used as follows to encrypt network data. First, the host platform 332 may receive network data 394' from the network device 392 over the network 390. In the embodiment illustrated in Figure 11, network data 394' from the network 390 originated from network device 392 as network data 394. However, the network data 394 need not come from the network device 392 but instead may be obtained from any suitable computer-readable storage medium residing at, or associated with, any of a wide range of other network devices operatively associated with or linked to the host platform 332. A user may also provide network data 394' directly to the host platform 332.

Regardless of the source of the network data 394', the host platform 332 may send the network data 394' to the processor 316 via access application 334, link 338, processor access device 330, and link 342, in the manner previously described and shown in Figure 10. Upon receipt of the network data 394', the processor 316 may encrypt the network data 394' by using any of a wide range of programs and/or systems well-known in the art for protecting data. To encrypt the network data 394', the processor 316 may access the computer-readable storage medium 318 and the data 326 stored therein via link 348, data access device 336, and link 344 in the manner previously described and shown in Figure 10, although this need not be the case.

After the network data 394' have been encrypted, the processor 316 may send encrypted network data 396 back to the host platform 332 via link 342, processor access device 330, link 338, and access application 334, in the manner previously described and shown in Figure 10. The processor 316 may also perform other data management processes on the network data before it is sent back to the host platform 332. For example, the processor 316 may, among other things, process the network data, add metadata to the network data, compress the network data, or decompress the network data before the network data is sent back to the host platform 332.

Upon receipt of the encrypted network data 396, the host platform 332 may then send the encrypted network data 396 back over the network 390 to the network device 392. Network device 392 receives the data as encrypted network data 396'. The host platform 332 may send the encrypted network data 396 to any suitable receiving device, and is not limited to sending the encrypted network data 396 to the network device 392. The other embodiments 10, 110, 210 of the storage apparatus may also be used in a similar manner to manage network data over a network.

During another operational sequence, illustrated in Figure 12, the storage apparatus 310 may be used to decrypt or decipher encrypted network data 398 from network device 392. For example, the host platform 332 may receive encrypted network data 398' from the network device 392 over the network 390. In response, the host platform 332 may send the encrypted network data 398' to the processor 316 via access application 334, link 338, processor access device 330, and link 342, in the manner previously described and shown in Figure 10.

Upon receipt of the encrypted network data 398', the processor 316 may decrypt the encrypted network data 398' data by using any of a wide range of programs and/or systems well-known in the art for decrypting encrypted data. To decrypt the encrypted network data 398', the processor 316 may access the computer-readable storage medium 318 and the data 326 stored therein via link 348, data access device 336, and link 344 in the manner previously described and shown in Figure 10, although this need not be the case.

In any event, after the network data has been decrypted, the processor 316 may send the decrypted network data 300 back to the host platform 332 via link 342, processor access device 330, link 338, and access application 334, in the manner previously described and shown in Figure 10. It should be noted that the processor 316 may also perform other data management processes other than decrypting the encrypted network data 398'. For example, the processor 316 may, among other things, process the network data, add metadata to the network data, compress the network data, or decompress the network data, before the network data is sent back to the host platform 332.

Upon receipt of the decrypted network data 300, the host platform 332 may then send the decrypted network data 300 back over the network 390, whereupon the decrypted network data 300 is received by the network device 392 as decrypted network data 300'. It is to be understood, however, that the host platform 332 may send the decrypted network data 300 to any suitable receiving device, and is not limited to sending the decrypted network data 300 to the network device 392.

In either of the above operational sequences, the storage apparatus may not perform a data management process, such as encryption or decryption, on the network data until after it has been determined that the user or network device, as the case may be, is authorized. However, since the manner in which the user or network device may be authenticated or repudiated may be similar to that previously described above, such processes will not be described in further detail herein.

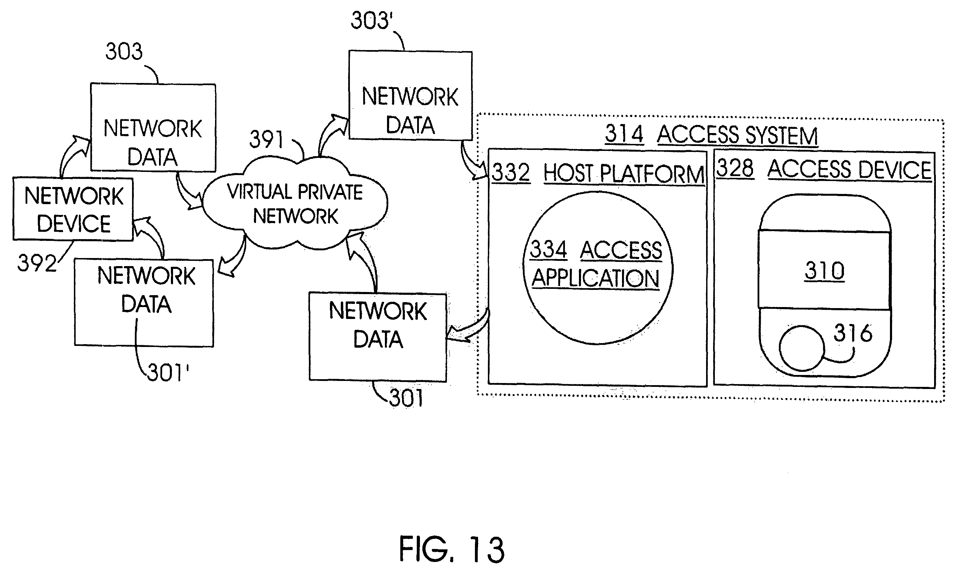

In yet another operational sequence, illustrated in Figure 13, the storage apparatus 310 may be used to create a virtual private network 391. Virtual private network 391 provides more secure data exchange compared with an open or non-private network. Therefore, the virtual private network 391 will eliminate, or at least reduce, the need to encrypt the data being exchanged on the virtual private network 391. Alternatively, the data may still be encrypted if additional security is desired.

In the embodiment illustrated in Figure 13, the virtual private network 391 is created in part by the processor 316 provided on the storage apparatus 310. Depending on the particular architecture of the virtual private network 391, it may be necessary or desirable to provide other network devices, such as network device 392, connected to the virtual private network 391, with processing capability and/or functionality to complete the virtual private network 391. As they currently exist, virtual private networks require that functionality for the network be provided to at least the two network devices (e.g., network device 392 and access system 314) between which data are to be exchanged. In addition, there may be a need to provide additional devices associated with the virtual private network 391, with virtual private network functionality in order to maintain the integrity of the virtual private network 391.

Once the virtual private network 391 is established between the storage apparatus 310 and the desired network device or devices (e.g., network device 392), network data 303 from the network device 392 may be transferred over the virtual private network 391. The access system 314 receives network data 303' from the virtual private network 391, whereupon the data may be processed by the host platform 332, access application 334, and access device 328 in accordance with any of the methods already described herein. Similarly, network data 301 from the access system 314 may be transferred over the virtual private network 391. The network device 392 may then receive network data 301' from the virtual private network 391.

As briefly mentioned above, virtual private networks, such as virtual private network 391, provide enhanced data security compared with non-private networks. Therefore, in many applications it will not be necessary to provide any additional data security measures. However, if more robust security is desired or required in a particular application, the data transferred over the virtual private network 391 may be encrypted in accordance with any of the methods described herein.

## Claims

1. A method, comprising:
reading data from a computer-readable medium (18) provided on a substrate (20);
reading a decryption algorithm from a processor (16) on the substrate (20); and
decrypting the data using the decryption algorithm.

2. The method of claim 1, further comprising using a PIN to determine user assess rights.

3. The method of claim 1, further comprising using a host platform (32) to decrypt the data.

4. The method of claim 1, further comprising using the processor (16) to decrypt the data.

5. The method of claim 1 further comprising using a data access device (36) to decrypt the data.

6. A method, comprising:
using a data access device (36) to read data from a computer-readable medium (18) provided on a substrate (20); and
controlling, by a processor (16) provided on the substrate (20), said data access device (36) to modify the data.

7. A method, comprising:
using a data access device (36) to read data from a computer-readable medium (18) provided on a substrate (20);
sending the data from the data access device (36) to a processor (16) provided on the substrate (20); and
modifying, by the processor (16), the data.

8. Apparatus (10), comprising:
a substrate (20);
a processor (16) provided on said substrate (20) for processing data;
a computer-readable medium (18) provided on said substrate (20) for storing data; and
an access device (28) operatively associated with said substrate (20) for interfacing with said processor (16) and said computer-readable medium (18).

9. The apparatus (10) of claim 8, wherein said processor (16) comprises a processor memory for storing data.

10. Apparatus (10), comprising:
a substrate (20);
a processor (16) provided on said substrate (20) ;
a computer-readable medium (18) provided on said substrate (20); and
an access device (28) operatively associated with said substrate (20), said access device (28) interfacing with said processor (16) and said computer-readable medium (18).
